# EUROPEAN PATENT SPECIFICATION

(11) **EP 4 558 558 B1**
(45) Date of publication and mention of the grant of the patent: **13.05.2026**
(21) Application number: 23741811.6
(22) Date of filing: 11.07.2023
(51) Int. Cl.: C08L 7/00, C08L 19/00, C08L 9/06

(54) **A RUBBER COMPOUND MIXTURE**
KAUTSCHUKMISCHUNG
MÉLANGE DE COMPOSÉS DE CAOUTCHOUC

(30) Priority: 19.07.2022 NL 2032546
(43) Date of publication of application: 28.05.2025
(73) Proprietor: Kargro Recycling B.V., 6031 MZ Nederweert (NL)
(72) Inventor: TWIGG, Christopher Michael, 6133 WL Sittard (NL); JONKMAN, Jan Anne, 6133 WL Sittard (NL); DAMSTER, Justin Michael, 6133 WL Sittard (NL)
(74) Representative: Algemeen Octrooi- en Merkenbureau B.V.
(86) International application number: PCT/NL2023/050371
(87) International publication number: WO 2024/019613

(56) References cited:
- EP-A1- 3 045 492
- WO-A1-2021/167457
- US-A1- 2016 152 805

## Description

The present invention relates to a rubber compound mixture comprising a matrix of a non-vulcanized rubber including micronized rubber powders and one or more auxiliaries. The present invention also relates a method for preparing such a rubber compound mixture, as well as to a rubber article.

Micronized rubber powder (MRP) is a low-cost, sustainable raw material that replaces crude oil-derived and natural rubber-based materials. MRP is a free flowing, black rubber powder that disperses into a multitude of systems and applications. Due to its micron size, MRP can be incorporated into multiple polymers, and provides a smooth surface appearance on finished products. In some cases, in order to improve compatibility and performance with host materials, the MRP is given a chemical treatment to activate, or "make functional" the surface of the powder particles. This is referred to as functionalized MRP or FMRP. Non-functionalized MRP only finds applications as a cheap filler. Micronized rubber powders (MRP) typically contain a significant fraction of rubber particles having a particle size of less than 100 microns. Powders having a particle size which is within the range of 40mesh (420 microns) or smaller are considered to be micronized rubber powder.

MRP represents an evolution over previous post-manufactured rubber technologies. The most basic rubber processing technology converts end-of-life tyre and post-industrial rubber material into rubber chips that are typically 10 to 50cm or larger in size. These chips are then used in tyre-derived fuel and civil engineering projects. MRP is a micron-size material that is produced in many sizes, including 80 mesh (177 microns) and down to 325 mesh (44 microns). Only FMRP finds its way into high end applications, such as high-performance tyres, industrial rubber, consumer and industrial plastics goods, asphalt and coatings and construction materials. MRP is used as a compound extender to offset the use of natural rubber, synthetic polymers and furnace carbon black as well as function as a process aid in material production.

Rubber formulations comprising micronized rubber powder are known in the art.

International application WO 2021/167457 in the name of the present inventors relates to a method for manufacturing micronized rubber powders comprising grinding of a rubber granulated feedstock, size classification and storage of the micronized rubber powders thus obtained, wherein during the grinding process an agent is used to prevent the rubber powder particles sticking to themselves.

US 2016/297243 relates to a tyre which is comprised of a toroidal-shaped carcass with an outer circumferential tread, two spaced beads, at least one ply extending from bead to bead and sidewalls extending radially from and connecting said tread to said beads, wherein the sidewalls comprise micronized rubber powder.

US 2016/152805 relates to a rubber composition which is comprised of a solution styrene-butadiene rubber; a functionalized renewed rubber composition which is comprised of an elastomeric polymer and a stabilizer, and a reinforcing filler including reinforcing silica.

EP 3 045 492 relates to a rubber formulation which is useful in rubber products or components of rubber products which are subject to abrasive forces, said rubber formulation comprises at least one natural or synthetic rubber and from 1 weight percent to 30 weight percent of a micronized rubber composition having a particle size which is within the range of 40 mesh (420 microns) to 200 mesh (74 microns), wherein the micronized rubber composition is comprised of at least 10 weight percent solution styrene-butadiene rubber.

US 2014/128535 relates to a method of functionalizing reclaimed elastomer material, the method comprising subjecting particles of the reclaimed elastomer material to shear at temperatures less than 100° C. such that inter-chain bonds of the reclaimed elastomer material are cleaved.

US 2017/114155 relates to a method for manufacturing a chemically functionalized, renewed rubber composition comprising the steps of blending a micronized rubber powder, i.e. a styrene-butadiene rubber, with a processing aid and a functionalizing agent to produce a blended mixture, processing the blended mixture under conditions of high shear and low temperature to produce a reacted mixture, and adding a stabilizer, i.e. N-cyclohexyl(thio)phthalimide, to the reacted mixture to produce the renewed rubber. The processing under conditions of high shear is generated on a 2-roll mill, wherein the functionalizing agent is a compound selected from the group consisting of alkyl thiuram sulfides, aryl thiuram sulfides, heterocyclic thiuram sulfides, thiuram disulfides, thiuram polysulfides, thiuram disulfides, thiuram multisulfides, tetrabenzylthiuram disulfides, cyclohexyl sulfonamides, t-butyl sulfonamides, tetraalkylthiuram disulfides, tetramethylthiuram disulfides, tetraethylthiuram disulfides, dipentamethylthiuram monosulfides, and tetramethylthiuram disulfides.

The present inventors are of the opinion that the greatest future role that Micronized Rubber Powders (MRP) can have towards CO₂ reduction and fulfilling cradle-to-cradle/circular economy principles is to re-use them in tyres. Approximately 25 million tons of new tyres are manufactured annually and currently around half of this volume of tyres are collected and enter the end-of-life (EOL) tyre management waste streams every year. To date there is still no significant re-use of waste tyres back into new tyres, resulting in a pressing global problem in how to deal with EOL tyres in an environmentally friendly way and to maximize the value and volumes of EOL tyre-derived circular materials.

An object of the present invention is to develop a method for chemically activating/functionalizing MRP.

Another object of the present invention is to further enhance the in-rubber performance characteristics of activated/functionalized micronized rubber powder (FMRP).

Another object of the present invention is to incorporate high concentrations of activated/functionalized micronized rubber powder (FMRP) in natural rubber compounds.

Another object of the present invention is to develop a method for converting functionalized MRP into a solid strip or slab whilst retaining performance and dispersibility.

The present invention thus relates to a rubber compound mixture comprising a matrix of a non-vulcanized rubber including micronized rubber powders and one or more auxiliaries, wherein the surface of the micronized rubber powders is functionalized with a silica component, a silane component and one or more functionalization components.

The present inventors found that by functionalizing the surface of the micronized rubber powders via a combination of these three components one or more objects are achieved. The present inventors found that reactivation of the vulcanization potential of the MRP by chemical treatment based on a combination of these three components can significantly improve both the mechanical and dynamic performance of MRPs in rubber compounds, thereby opening the door to large scale re-use within the tyre and TRG sectors.

In an embodiment the one or more functionalization components are chosen from the group of diphenyl guanidine, hexylamine, decylamine, octadecylamine, cyclohexylamine, dicyclohexylamine, quinuclidine, di-o-tolylguanidine, dithiophosphate, phosphoryl polysulphide, and diazabicycloundecene, wherein diphenyl guanidine is a preferred embodiment of such a functionalization component.

In an embodiment the one or more functionalization components are chosen from the group of zinc dialkyldithiophosphate (ZDTP), polyethyleneimine (PEI), 1,6-bis((dibenzylthiocarbamoyl)disulphanyl)hexane and dialkylpentasulphide.

In an embodiment of a rubber compound the amount of the one or more functionalization components is at least 0,1 wt.% and at most 1 wt.%, based on the total weight of the rubber compound mixture.

In an embodiment of a rubber compound the silica component is chosen from the group of synthetic amorphous precipitated silicas having a BET surface area of at least 165 m²/g. BET surface area is relevant with regards to specifying the grade of precipitated silica. An example of a preferred silica is Ultrasil VN3 which has a nominal specific nitrogen surface area of 180 m²/g, measured in accordance with ISO 9277 (multipoint). The present inventors prefer to use a fluffy type of precipitated silica, i.e. a non-pelletized form, in order to maximize dispersion and its coverage onto the surface of the rubber particles.

In an embodiment of a rubber compound the amount of the silica component is at least 7 wt.%, preferably at least 15 wt.% and at most 36 wt.%, preferably at most 25 wt.%, based on the total weight of the rubber compound mixture.

In an embodiment of a rubber compound the silane component is chosen from the group of polysulphide organosilanes.

In an embodiment of a rubber compound the amount of the silane component is at least 0,5 wt.%, preferably at least 1 wt.% and at most 4 wt.%, preferably at most 3 wt.%, based on the total weight of the rubber compound mixture.

In an embodiment of a rubber compound the non-vulcanized rubber is natural rubber.

In an embodiment of a rubber compound the amount of micronized rubber powders is at least 1 wt.% and at most 50 wt.%, based on the total weight of the rubber compound mixture.

The particle size distribution (PSD) of the micronized rubber powder (MRP) is such that preferably D95 < 200 µm and D50 < 120 µm, more preferably D95 < 180 µm and D50 < 100 µm. These values refer to micronized rubber powder (MRP) before any chemicals are added. For example SI69 silane will cause the particles to swell and become bigger.

The micronized rubber powder (MRP) may originate from the following group of tyres, i.e. 100% whole truck/bus tyres, 100% whole passenger car tyres, 100% off-the-road (OTR) tyres, 100% agricultural tyres, 100% mining tyres, 100% forklift and other solid tyres, 100% motorcycle tyres, 100% grand prix racing tyres and 100% bicycle tyres, or any blend thereof.

In addition, other examples of micronized rubber powder (MRP) are kinds of end-of-life rubber products having similar chemical compositions to tyres which are predominantly based on mixtures of natural rubber (NR), styrene butadiene rubber (SBR) and polybutadiene rubber (BR), for example, but not limited to, rubber tracks, conveyor belts, cables, mouldings and extrusions, various vulcanized internal waste streams from the tyre manufacturing industry, and blends thereof, optionally including any of the tyre waste streams.

Furthermore, other examples of micronized rubber powder (MRP) are other kinds of dissimilar rubber products that are not predominantly based upon natural rubber (NR), styrene butadiene rubber (SBR) and polybutadiene rubber (BR), and blends of these, such as product waste-streams comprised predominantly of EPDM (Ethylene Propylene Diene Monomer rubber), polychloroprene (CR), chlorosulphonated polyethylene (CSM), polyacrylate and acrylic ester copolymers (ACM), nitrile rubber (NBR), hydrogenated nitrile rubber (HNBR), chlorinate polyethylene (CPE) and silicone rubber (VMQ).

The present invention also relates to a method for preparing a rubber compound mixture comprising a matrix of non-vulcanized rubber including micronized rubber powders and one or more auxiliaries, the method comprising the following:
a) providing a micronized rubber powder,
b) providing a non-vulcanized rubber,
c) mixing the micronized rubber powder of step a) and the one or more functionalization components under high speed in a mixing unit,
d) adding the silica component and silane component to the mixture of step c) under high speed,
e) removing the functionalized micronized rubber powder from the mixing unit,
f) mixing the functionalized micronized rubber powder of step e) with the non-vulcanized rubber of step b) and the one or more auxiliaries for obtaining the rubber compound mixture.

In an embodiment of the present method the addition of the silane component according to step d) is carried out after the addition of both the silica component and the one or more functionalization components.

In an embodiment of the present method the one or more auxiliaries are chosen from the group of peptizer, carbon black, recovered carbon black, silica, stearic acid, scorch retarder, antidegradants, plasticizer, sulphur, accelerators, organic peroxides, peroxide-cure coagents and processing aids.

In an embodiment of step f) of the present method the non-vulcanized rubber of step b) and the one or more auxiliaries are pre-mixed and the premix thus obtained is mixed with the functionalized micronized rubber powder of step e) for obtaining the rubber compound mixture.

In an embodiment of the of the present method the silica is firstly used as a deagglomeration agent and as such has to be added upstream of the process of adding silane. The present inventors found that if the silica is added after the silane it will not have adsorbed sufficient silane to be an effective enhancer to the functionalization chemistry. According to a preferred sequence of adding the various chemical components the silica will be added first, secondly any non-silane chemical and thirdly the silane. In another embodiment it is also possible to pre-mix certain functionalization soluble/miscible components with the silane (e.g. dialkylpentasulphide) in a certain blend ratio and as such will be added.

The present invention also relates to a method for manufacturing a rubber article via vulcanization, wherein the rubber compound mixture as discussed above or a rubber compound mixture obtained according to a method as discussed above is vulcanized under elevated pressure and temperature.

The present invention also relates to a rubber article, comprising a matrix of vulcanized rubber matrix including functionalized micronized rubber powders.

A method for manufacturing micronized rubber powders has been disclosed in International application WO 2021/167457 in the name of the present inventors.

The principle of "surface activation" is to form chemical crosslinks between the vulcanized MRP and unvulcanized rubber compound during vulcanization of the new rubber product. The powders no longer exist as "discrete and disruptive" particles in the new compound matrix, instead they become an integral (bonded) part of a much more homogenous matrix. The surface activation can be achieved, for example, by coating the surface of the powder with a cross-linkable (unsaturated) polymer together with certain vulcanization chemicals such as zinc oxide, stearic acid, sulphur and organic accelerators

The surface treatment can be applied, for example, by a continuous extrusion or continuous powder mixing process. The conversion to a solid strip is a separate process that takes place after the MRP has already been converted to FMRP. An extrusion or milling process would convert the powder into a solid strip or slab. Such a process would have the advantage of converting a low bulk density powder to an extruded solid form (e.g. strip, sheet) where the powder particles become bound together by the new polymer(s) and other process additives. Furthermore, conversion of low bulk density powder to a solid material will almost triple the bulk density of the powder (from ~400 kg/m³ to ~1150 kg/m³) thereby facilitating efficient transportation and avoiding expensive powder bagging costs.

For the purpose of promoting an understanding of the principles of the present invention, reference will now be made to the embodiments illustrated in the tables. It will, nevertheless, be understood that no limitation of the scope of the disclosure is thereby intended; any alterations and further modifications of the described or illustrated embodiments, and any further applications of the principles of the disclosure as illustrated therein are contemplated as would normally occur to one skilled in the art to which the invention relates.

The term "functionalized" or "activated" refers to functionalized or "surface-devulcanized" material made from micronized rubber powders, as described herein above. The terms "functionalized" and "activated" are terms within the context having the same meaning. Such meaning is the ability to create interfacial crosslinks during vulcanization.

The term "subjected to shear" refers to a process of feeding the rubber formulation into the nip between first and second counter-rotating rolls, wherein the first roll is rotating at a different speed than the second roll.

The practice of the present invention can be further understood by reference to the following examples, which are provided by way of illustration only are not intended to be limiting.

### Examples

Several test examples (see Table 1 and 2) were prepared out to investigate the performance of the rubber composition.

The test examples were compared with a so-called test recipe. The composition of the test recipes is shown in Table 1 and Table 2. Table 1 refers to a natural rubber compound recipe (ASTM D3192), Table 2 to a reference SBR rubber compound (ASTM D3191). Both recipes do not contain any functionalized micronized rubber powders.

Tests were performed in natural rubber (according to ASTM D3192) and in SBR rubber (according to ASTM D3191).

Weight concentrations of functionalized micronized rubber powders (FMRP) evaluated were 0%, 15%, 25% and 50% in natural rubber and 0% and 15% in SBR rubber.

The reference compounds were pre-mixed without the addition of any functionalized micronized rubber powders (FMRP) in a laboratory Banbury.

The mixing of the functionalized micronized rubber powders (FMRP) samples was conducted using a laboratory two roll mill where the temperature of the rolls was 60 degC. Batch size was 55 grams.

Vulcanization of the natural rubber test slabs was performed in a laboratory compression moulding machine for 10 minutes at 160 degC. Vulcanization of the SBR test slabs was performed in a laboratory compression moulding machine for 16 minutes at 160 degC.

The micronized rubber powder from which the functionalized micronized rubber powders (FMRP) test samples were produced was from 100% whole truck tyre feedstock, cryogenically ground to a particle size distribution of D95<180µm. As a method for measuring the particle size distribution two possibilities can be mentioned here: using a sieving tower (ISO 3310-1:2016) and using laser diffraction and light scattering techniques (ISO 13320:2019).

The preparation of functionalized micronized rubber powders (FMRP) by the addition of a silica component, a silane component and a functionalization component was conducted in a laboratory high speed powder mixer having a workable batch size of 250 grams. As a functionalization component diphenyl guanidine in powder form was used. As silica component Hi-Sil 255 (a synthetic amorphous precipitated silica, PPG) in powder form was used. As silane component Nansil 4 (Bis-(3-[triethoxysilyl]-propyl)- tetrasulfan) or silane coupling agent Si 69 (Evonik) was used. Si 69 is bis(triethoxysilylpropyl)tetrasulfide (TESPT) or (by the IUPAC name) tetrasulfanediyldi(propane-3,1-diyl)]bis(triethoxysilane).

The sequence of addition was:
0 seconds: add diphenyl guanidine over approximately 10 seconds
30 seconds: add silica over a period of approximately 5 seconds
60 seconds: add silane using a fine spray bottle over a period of around 40-50 seconds
120 seconds: remove from mixer

The temperature at the end of the mixing cycle did not exceed 50 degC.

Tensile properties were performed according to ISO 37 Type 2.

Tear strength was determined according to ISO 34-1 Method C.

**Table 1: Composition of test recipe (natural rubber)**

| **PPHR** | **MATERIAL** | **WEIGHT** | **UNIT** | **%** |
|---|---|---|---|---|
| | | | | |
| 100 | NR EXA10 | 34.14 | grams | 62.1 |
| 5 | Zinc oxide | 1.71 | grams | 3.1 |
| 3 | Stearic acid | 1.02 | grams | 1.9 |
| 50 | N550 carbon black | 17.07 | grams | 31.0 |
| | | | | |
| 0 | (F)MRP sample | 0.00 | grams | 0.0 |
| | | | | |
| 2.5 | Sulphur | 0.85 | grams | 1.6 |
| 0.6 | MBTS | 0.20 | grams | 0.4 |
| | | | | |
| 161.1 | Total: | 55.00 | grams | 100.0 |
| | Batch weight: | 55 | | |

**Table 2: Composition of test recipe (SBR rubber)**

| **PPHR** | **MATERIAL** | **WEIGHT** | **UNIT** | **%** |
|---|---|---|---|---|
| | | | | |
| 100 | SBR 1500 | 35.09 | grams | 63.8 |
| 3 | Zinc oxide | 1.05 | grams | 1.9 |
| 1 | Stearic acid | 0.35 | grams | 0.6 |
| 50 | N550 carbon black | 17.54 | grams | 31.9 |
| | | | | |
| 0 | (F)MRP | 0.00 | grams | 0.0 |
| | | | | |
| 1.75 | Sulphur | 0.61 | grams | 1.1 |
| 1 | TBBS | 0.35 | grams | 0.6 |
| | | | | |
| 156.75 | Total: | 55.00 | grams | 100.0 |
| | Batch weight: | 55 | | |

Several additional test examples (see Table 3 and 4) were prepared out to investigate the performance of the rubber composition, i.e. Table 3 (natural rubber) and Table 4 (SBR).

**Table 3: test results for natural rubber**

| Test | Functionalization | FMRP | M100 | M300 | TS, MPa | Elongation | Tear Strength |
|---|---|---|---|---|---|---|---|
| | Recipe | Loading, % | MPa | MPa | MPa | % | kN/m |
| | | | | | | | |
| 1 | none | 0 | 2.1 | 8.0 | 21.0 | 710 | 22.3 |
| | | | | | | | |
| 2 | none | 15 | 1.7 | 5.6 | 16.1 | 660 | 16.7 |
| 3 | none | 25 | 1.5 | 5.1 | 14.7 | 655 | 13.8 |
| 4 | none | 50 | 1.3 | 4.8 | 11.2 | 560 | 9.8 |
| | | | | | | | |
| 5 | silane 5% | 15 | 2.0 | 7.7 | 18.7 | 675 | 22.1 |
| 6 | silica 0.5%, silane 5% | 15 | 2.2 | 8.0 | 20.5 | 705 | 24.0 |
| 7 | DPG 0.2%, silica 0.5%, silane 5% | 15 | 2.3 | 8.2 | 20.4 | 680 | 31.2 |
| | | | | | | | |
| 8 | silane 5% | 25 | 2.1 | 8.2 | 17.7 | 645 | 23.8 |
| 9 | silica 0.5%, silane 5% | 25 | 2.4 | 8.5 | 18.1 | 660 | 26.0 |
| 10 | DPG 0.2%, silica 0.5%, silane 5% | 25 | 2.6 | 9.0 | 20.4 | 665 | 34.7 |
| | | | | | | | |
| 11 | silane 5% | 50 | 1.8 | 6.9 | 11.8 | 540 | 18.5 |
| 12 | silica 0.5%, silane 5% | 50 | 2.0 | 7.1 | 12.6 | 540 | 19.1 |
| 13 | DPG 0.2%, silica 0.5%, silane 5% | 50 | 2.2 | 7.8 | 14.8 | 580 | 24.0 |
| | | | | | | | |
| 14 | DPG 1%, silica 0.5%, silane 5% | 50 | 3.2 | 10.9 | 17.5 | 515 | 26.1 |
| 15 | DPG 2%, silica 0.5%, silane 5% | 50 | 3.7 | 12.6 | 17.4 | 440 | 21.1 |

From the results of Table 3 it is clear that recipe #1 is a reference recipe, i.e. a composition without the addition of any functionalized micronized rubber powders (FMRP). Recipes #2-4 refer to compositions with different concentrations of functionalized micronized rubber powders (FMRP), i.e. 15 wt.%, 25 wt.% and 50 wt.% respectively. The properties of the test slab are significantly reduced. For example, the tensile strength is reduced from 21.0 MPa to 11.2 MPa for a loading of 50 wt.% FMRP.

An enhancement of the properties is observed by the addition of a silica component, a silane component and a functionalization component. See in that context a much higher tear strength (kN/m) for recipe #7 (31.2 kN/m) compared to recipe #6 (only addition of silica component and silane component, 24.0 kN/m)). The same applies for recipe#9 compared to recipe #10.

**Table 4: test results for SBR**

| Test | Functionalization | FMRP | M100 | M300 | TS, MPa | Elongation | Tear Strength |
|---|---|---|---|---|---|---|---|
| | Recipe | Loading, % | MPa | MPa | MPa | % | kN/m |
| | | | | | | | |
| 1 | none | 0 | 3.3 | 10.3 | 18.1 | 560 | 22.2 |
| | | | | | | | |
| 2 | none | 15 | 2.6 | 8.4 | 14.5 | 610 | 15.2 |
| | | | | | | | |
| 3 | silica 0.5%, silane 5% | 15 | 3.2 | 10.7 | 17.3 | 510 | 20.6 |
| | | | | | | | |
| 4 | DPG 0.2%, silica 0.5%, silane 5% | 15 | 3.3 | 10.7 | 16.9 | 490 | 19.7 |
| 5 | DPG 0.4%, silica 0.5%, silane 5% | 15 | 3.2 | 10.8 | 16.9 | 500 | 19.6 |
| 6 | DPG 0.6%, silica 0.5%, silane 5% | 15 | 3.3 | 10.9 | 17.2 | 490 | 19.4 |
| 7 | DPG 0.8%, silica 0.5%, silane 5% | 15 | 3.3 | 10.9 | 17.0 | 480 | 19.6 |
| 8 | DPG 1.0%, silica 0.5%, silane 5% | 15 | 3.5 | 11.4 | 16.8 | 470 | 18.6 |

From the results of Table 4 it is clear that the beneficial results as demonstrated for natural rubber in Table 3 have not been observed for SBR. In fact, the tear strength is deteriorated when adding a silica component, a silane component and a functionalization component to the SBR. See in that context recipe #4 compared to reference recipe #1.

From both Table 3 and Table 4 the conclusion is that the addition of unfunctionalized MRP results in a deterioration of properties. The higher the concentration that is added the more severe the deterioration becomes. Furthermore, the addition of 5% silane alone provides a significant beneficial effect, and the combination of 0.5% silica with 5% silane shows an increased performance over the addition of only 5% silane.

The present inventors surprisingly found that the combination of 0.5 wt.% silica, 5 wt.% silane and between 0.1 and 2 wt.,% diphenyl guanidine, preferably between 0.1 and 1 wt.% provides satisfactory results. In addition, the properties of SBR were improved by the addition of 0.5 wt.% silica and 5 wt.% silane but were not further enhanced by adding diphenyl guanidine.

## Claims

1. A rubber compound mixture comprising a matrix of a non-vulcanized rubber including micronized rubber powders having a particle size which is within the range of 420 microns or smaller and one or more auxiliaries, wherein the surface of the micronized rubber powders is functionalized with a silica component, a silane component and one or more functionalization components.

2. A rubber compound according to claim 1, wherein the one or more functionalization components are chosen from the group of diphenyl guanidine, hexylamine, decylamine, octadecylamine, cyclohexylamine, dicyclohexylamine, quinuclidine, di-o-tolylguanidine, dithiophosphate, phosphoryl polysulphide, and diazabicycloundecene.

3. A rubber compound according to claim 1, wherein the functionalization component is diphenyl guanidine.

4. A rubber compound according to any one or more the preceding claims, wherein the amount of the one or more functionalization components is at least 0,1 wt.% and at most 1 wt.%, based on the total weight of the rubber compound mixture.

5. A rubber compound according to any one or more the preceding claims, wherein the silica component is chosen from the group of synthetic amorphous precipitated silicas having a BET surface area of at least 165 m²/g, especially wherein the amount of the silica component is at least 7 wt.%, preferably at least 15 wt.% and at most 36 wt.%, preferably at most 25 wt.%, based on the total weight of the rubber compound mixture, measured in accordance with ISO 9277 (multipoint).

6. A rubber compound according to any one or more the preceding claims, wherein the silane component is chosen from the group of polysulphide organosilanes, especially wherein the amount of the silane component is at least 0,5 wt.%, preferably at least 1 wt.% and at most 4 wt.%, preferably at most 3 wt.%, based on the total weight of the rubber compound mixture.

7. A rubber compound according to any one or more the preceding claims, wherein the non-vulcanized rubber is natural rubber.

8. A rubber compound according to any one or more the preceding claims, wherein the amount of micronized rubber powders is at least 1 wt.% and at most 50 wt.%, based on the total weight of the rubber compound mixture.

9. A rubber compound according to any one or more the preceding claims, wherein the particle size distribution (PSD) of the micronized rubber powder (MRP) is such that D95 < 200 µm and D50 < 120 µm, preferably D95 < 180 µm and D50 < 100 µm.

10. A method for preparing a rubber compound mixture comprising a matrix of non-vulcanized rubber including micronized rubber powders and one or more auxiliaries, the method comprising the following:
a) providing a micronized rubber powder having a particle size which is within the range of 420 microns or smaller,
b) providing a non-vulcanized rubber,
c) mixing the micronized rubber powder of step a) and the one or more functionalization components under high speed in a mixing unit,
d) adding the silica component and silane component to the mixture of step c) under high speed,
e) removing the functionalized micronized rubber powder from the mixing unit,
f) mixing the functionalized micronized rubber powder of step e) with the non-vulcanized rubber of step b) and the one or more auxiliaries for obtaining the rubber compound mixture.

11. A method according to claim 10, wherein in step d) the silane component is added after the silica component and the one or more functionalization components.

12. A method according to any one of claims 10-11, wherein the one or more auxiliaries are chosen from the group of peptizer, carbon black, recovered carbon black, silica, stearic acid, scorch retarder, antidegradants, plasticizer, sulphur, accelerators, organic peroxides, peroxide-cure coagents and processing aids.

13. A method according to any one of claims 10-12, wherein in step f) the non-vulcanized rubber of step b) and the one or more auxiliaries are pre-mixed and the premix thus obtained is mixed with the functionalized micronized rubber powder of step e) for obtaining the rubber compound mixture.

14. A method for manufacturing a rubber article via vulcanization, wherein the rubber compound mixture according to any one or more of the claims 1-9 or a rubber compound mixture obtained according to a method according to claims 10-13 is vulcanized under elevated pressure and temperature.

15. Rubber article, comprising a matrix of vulcanized rubber matrix including functionalized micronized rubber powders, obtained according to a method for manufacturing a rubber article via vulcanization according to claim 14.

## Patentansprüche

1. Kautschukmischung, umfassend eine Matrix aus einem nicht vulkanisierten Kautschuk, die mikronisiertes Kautschukpulver mit einer Partikelgröße, welche im Bereich von 420 Mikron oder kleiner liegt, und einen oder mehrere Hilfsstoffe einschließt, wobei die Oberfläche der mikronisierten Kautschukpulver mit einer Kieselsäurekomponente, einer Silankomponente und einer oder mehreren Funktionalisierungskomponenten funktionalisiert ist.

2. Kautschukmischung gemäß Anspruch 1, wobei die eine oder mehreren Funktionalisierungskomponenten ausgewählt sind aus der Gruppe von Diphenylguanidin, Hexylamin, Decylamin, Octadecylamin, Cyclohexylamin, Dicyclohexylamin, Chinuclidin, Di-o-tolylguanidin, Dithiophosphat, Phosphorylpolysulfid und Diazabicycloundecen.

3. Kautschukmischung gemäß Anspruch 1, wobei die Funktionalisierungskomponente Diphenylguanidin ist.

4. Kautschukmischung gemäß einem oder mehreren der vorhergehenden Ansprüche, wobei die Menge der einen oder mehreren Funktionalisierungskomponenten zumindest 0,1 Gew.-% und höchstens 1 Gew.-% basierend auf dem Gesamtgewicht der Kautschukmischung beträgt.

5. Kautschukmischung gemäß einem oder mehreren der vorhergehenden Ansprüche, wobei die Kieselsäurekomponente ausgewählt ist aus der Gruppe der synthetischen, amorphen, gefällten Kieselsäuren mit einer BET-Oberfläche von zumindest 165 m²/g, insbesondere wobei die Menge der Kieselsäurekomponente zumindest 7 Gew.-%, bevorzugt zumindest 15 Gew.-% und höchstens 36 Gew. %, bevorzugt höchstens 25 Gew.-% beträgt, basierend auf dem Gesamtgewicht der Kautschukmischung, gemessen in Übereinstimmung mit ISO 9277 (Multipunkt).

6. Kautschukmischung gemäß einem oder mehreren der vorhergehenden Ansprüche, wobei die Silankomponente ausgewählt ist aus der Gruppe der Polysulfidorganosilane, insbesondere wobei die Menge der Silankomponente zumindest 0,5 Gew.-%, vorzugsweise zumindest 1 Gew.-% und höchstens 4 Gew.-%, vorzugsweise höchstens 3 Gew.-% beträgt, basierend auf dem Gesamtgewicht der Kautschukmischung.

7. Kautschukmischung gemäß einem oder mehreren der vorhergehenden Ansprüche, wobei der nicht vulkanisierte Kautschuk Naturkautschuk ist.

8. Kautschukmischung gemäß einem oder mehreren der vorhergehenden Ansprüche, wobei die Menge an mikronisierten Kautschukpulvern zumindest 1 Gew.-% und höchstens 50 Gew.-% beträgt, basierend auf dem Gesamtgewicht der Kautschukmischung.

9. Kautschukmischung gemäß einem oder mehreren der vorhergehenden Ansprüche, wobei die Partikelgrößenverteilung (PSD) des mikronisierten Kautschukpulvers (MRP) derart ist, dass D95 < 200 µm und D50 < 120 µm, vorzugsweise D95 < 180 µm und D50 < 100 µm.

10. Verfahren zum Vorbereiten einer Kautschukmischung, umfassend eine Matrix aus nicht vulkanisiertem Kautschuk, die mikronisiertes Kautschukpulver und ein oder mehrere Hilfsstoffe einschließt, das Verfahren das Folgende umfassend:
a) Bereitstellen eines mikronisierten Kautschukpulvers mit einer Partikelgröße, welche im Bereich von 420 Mikron oder kleiner liegt,
b) Bereitstellen eines nicht vulkanisierten Kautschuks,
c) Mischen des mikronisierten Kautschukpulvers von Schritt a) und der einen oder mehreren Funktionalisierungskomponenten unter hoher Geschwindigkeit in einer Mischeinheit,
d) Zugeben der Kieselsäurekomponente und der Silankomponente zu der Mischung aus Schritt c) unter hoher Geschwindigkeit,
e) Entfernen des funktionalisierten, mikronisierten Kautschukpulvers aus der Mischeinheit,
f) Mischen des funktionalisierten, mikronisierten Kautschukpulvers von Schritt e) mit dem nicht vulkanisierten Kautschuk von Schritt b) und dem einen oder den mehreren Hilfsstoffen zum Erhalten der Kautschukmischung.

11. Verfahren gemäß Anspruch 10, wobei in Schritt d) die Silankomponente nach der Kieselsäurekomponente und der einen oder den mehreren Funktionalisierungskomponenten zugegeben wird.

12. Verfahren gemäß einem der Ansprüche 10-11, wobei der eine oder die mehreren Hilfsstoffe ausgewählt sind aus der Gruppe von Peptisator, Ruß, rückgewonnenem Ruß, Kieselsäure, Stearinsäure, Flammhemmer, Antidegradantien, Weichmacher, Schwefel, Beschleunigern, organischen Peroxiden, Peroxidhärtungskoagenzien und Verarbeitungshilfsmitteln.

13. Verfahren gemäß einem der Ansprüche 10-12, wobei in Schritt f) der nicht vulkanisierte Kautschuk von Schritt b) und der eine oder die mehreren Hilfsstoffe vorgemischt werden und die so erhaltene Vormischung mit dem funktionalisierten, mikronisierten Kautschukpulver von Schritt e) zum Erhalten der Kautschukmischung gemischt wird.

14. Verfahren zum Herstellen eines Kautschukartikels durch Vulkanisation, wobei die Kautschukmischung gemäß einem oder mehreren der Ansprüche 1-9 oder eine Kautschukmischung, die gemäß einem Verfahren gemäß den Ansprüchen 10-13 erhalten wurde, unter erhöhtem Druck und erhöhter Temperatur vulkanisiert wird.

15. Kautschukartikel, umfassend eine Matrix aus vulkanisierter Kautschukmatrix, einschließlich funktionalisierter, mikronisierter Kautschukpulver, die gemäß einem Verfahren zum Herstellen eines Kautschukartikels durch Vulkanisation gemäß Anspruch 14 erhalten wurden.

## Revendications

1. Mélange de composés de caoutchouc comprenant une matrice d'un caoutchouc non vulcanisé comprenant des poudres de caoutchouc micronisées dont la taille de particules est inférieure ou égale à 420 microns et un ou plusieurs auxiliaires, dans lequel la surface des poudres de caoutchouc micronisées est fonctionnalisée avec un composant silice, un composant silane et un ou plusieurs composants de fonctionnalisation.

2. Composé de caoutchouc selon la revendication 1, dans lequel le ou les composants de fonctionnalisation sont choisis dans le groupe de diphénylguanidine, hexylamine, décylamine, octadécylamine, cyclohexylamine, dicyclohexylamine, quinuclidine, di-o-tolylguanidine, dithiophosphate, polysulfure de phosphoryle et diazabicycloundécène.

3. Composé de caoutchouc selon la revendication 1, dans lequel le composant de fonctionnalisation est la diphénylguanidine.

4. Composé de caoutchouc selon l'une quelconque ou plusieurs des revendications précédentes, dans lequel la quantité du ou des composants de fonctionnalisation est d'au moins 0,1 % en poids et d'au plus 1 % en poids, par rapport au poids total du mélange de composés de caoutchouc.

5. Composé de caoutchouc selon l'une quelconque ou plusieurs des revendications précédentes, dans lequel le composant silice est choisi dans le groupe de silices amorphes synthétiques précipitées présentant une surface spécifique BET d'au moins 165 m²/g, en particulier dans lequel la quantité du composant silice est d'au moins 7 % en poids, de préférence d'au moins 15 % en poids et d'au plus 36 % en poids, de préférence d'au plus 25 % en poids, par rapport au poids total du mélange de composés de caoutchouc, mesurée conformément à la norme ISO 9277 (multipoint).

6. Composé de caoutchouc selon l'une quelconque ou plusieurs des revendications précédentes, dans lequel le composant silane est choisi dans le groupe d'organosilanes polysulfurés, en particulier dans lequel la quantité du composant silane est d'au moins 0,5 % en poids, de préférence d'au moins 1 % en poids et d'au plus 4 % en poids, de préférence d'au plus 3 % en poids, par rapport au poids total du mélange de composés de caoutchouc.

7. Composé de caoutchouc selon l'une quelconque ou plusieurs des revendications précédentes, dans lequel le caoutchouc non vulcanisé est du caoutchouc naturel.

8. Composé de caoutchouc selon l'une quelconque ou plusieurs des revendications précédentes, dans lequel la quantité de poudres de caoutchouc micronisées est d'au moins 1 % en poids et d'au plus 50 % en poids, par rapport au poids total du mélange de composés de caoutchouc.

9. Composé de caoutchouc selon l'une quelconque ou plusieurs des revendications précédentes, dans lequel la distribution granulométrique (PSD) de la poudre de caoutchouc micronisée (MRP) est telle que D95 < 200 µm et D50 < 120 µm, de préférence D95 < 180 µm et D50 < 100 µm.

10. Procédé permettant la préparation d'un mélange de composés de caoutchouc comprenant une matrice de caoutchouc non vulcanisé comprenant des poudres de caoutchouc micronisées et un ou plusieurs auxiliaires, le procédé comprenant ce qui suit :
a) la fourniture d'une poudre de caoutchouc micronisée dont la taille de particules est inférieure ou égale à 420 microns,
b) la fourniture d'un caoutchouc non vulcanisé,
c) le mélange de la poudre de caoutchouc micronisée de l'étape a) et du ou des composants de fonctionnalisation à grande vitesse dans une unité de mélange,
d) l'ajout du composant silice et du composant silane au mélange de l'étape c) à grande vitesse,
e) le retrait de la poudre de caoutchouc micronisée fonctionnalisée de l'unité de mélange,
f) le mélange de la poudre de caoutchouc micronisée fonctionnalisée de l'étape e) avec le caoutchouc non vulcanisé de l'étape b) et le ou les auxiliaires pour obtenir le mélange de composés de caoutchouc.

11. Procédé selon la revendication 10, dans lequel, à l'étape d), le composant silane est ajouté après le composant silice et le ou les composants de fonctionnalisation.

12. Procédé selon l'une quelconque des revendications 10 et 11, dans lequel le ou les auxiliaires sont choisis dans le groupe de peptisant, noir de carbone, noir de carbone recyclé, silice, acide stéarique, retardateur de grillage, agents protecteurs, plastifiant, soufre, accélérateurs, peroxydes organiques, co-agents de vulcanisation au peroxyde et adjuvants de traitement.

13. Procédé selon l'une quelconque des revendications 10 à 12, dans lequel, à l'étape f), le caoutchouc non vulcanisé de l'étape b) et le ou les auxiliaires sont prémélangés et le prémélange ainsi obtenu est mélangé à la poudre de caoutchouc micronisée fonctionnalisée de l'étape e) pour obtenir le mélange de composés de caoutchouc.

14. Procédé permettant la fabrication d'un article en caoutchouc par vulcanisation, dans lequel le mélange de composés de caoutchouc selon l'une quelconque ou plusieurs des revendications 1 à 9 ou un mélange de composés de caoutchouc obtenu selon un procédé selon les revendications 10 à 13 est vulcanisé sous pression et température élevées.

15. Article en caoutchouc, comprenant une matrice de matrice de caoutchouc vulcanisé comprenant des poudres de caoutchouc micronisées fonctionnalisées, obtenu selon un procédé permettant la fabrication d'un article en caoutchouc par vulcanisation selon la revendication 14.
